# EUROPÄISCHE PATENTSCHRIFT

(11) **EP 2 817 177 B1**
(45) Veröffentlichungstag und Bekanntmachung des Hinweises auf die Patenterteilung: **24.08.2016**
(21) Anmeldenummer: 13708675.7
(22) Anmeldetag: 20.02.2013
(51) Int. Cl.: B60R 21/16, B60R 21/205, B60R 21/217

(54) **GASSACK-MODUL SOWIE BAUGRUPPE MIT EINER INSTRUMENTENTAFEL UND EINEM GASSACK-MODUL**
AIRBAG MODULE AND ASSEMBLY HAVING AN INSTRUMENT PANEL AND AN AIRBAG MODULE
MODULE DE COUSSIN GONFLABLE AINSI QUE SOUS-ENSEMBLE COMPRENANT UN TABLEAU DE BORD ET UN MODULE DE COUSSIN GONFLABLE

(30) Priorität: 21.02.2012 DE 102012003351
(43) Veröffentlichungstag der Anmeldung: 31.12.2014
(73) Patentinhaber: TRW Automotive GmbH, 73553 Alfdorf (DE)
(72) Erfinder: SCHMID, Juergen, 73568 Durlangen (DE)
(74) Vertreter: Prehn, Manfred
(86) Internationale Anmeldenummer: PCT/EP2013/000483
(87) Internationale Veröffentlichungsnummer: WO 2013/124055

(56) Entgegenhaltungen:
- WO-A1-2005/100104
- US-A- 5 549 324

## Beschreibung

Die Erfindung betrifft eine Baugruppe mit einer Instrumententafel und einem Gassack-Modul.

Aus dem Stand der Technik sind Gassack-Module bekannt, die an einer Instrumententafel angebracht sind. Sie dienen meist zum Schutz eines Beifahrers bei einem Unfall und sind hinter einer Austrittsöffnung angeordnet, die in der Instrumententafel für den Gassack vorgesehen ist. Im Ausgangszustand ist die Austrittsöffnung durch einen Klappenabschnitt der Instrumententafel verschlossen, der bei einer Aktivierung des Gassack-Moduls die Austrittsöffnung freigibt.

Das Gassack-Modul weist üblicherweise ein Gehäuse auf, das wannenartig ausgeführt sein kann und in seinem Inneren einen zusammengelegten Gassack aufnimmt. Am Gehäuse ist auch ein Gasgenerator angebracht, der mit dem Gassack in Strömungsverbindung steht. Das Gehäuse ist an der Instrumententafel unterhalb der Austrittsöffnung angebracht, sodass bei Aktivierung des Gasgenerators der sich entfaltende Gassack durch die Austrittsöffnung in den Fahrzeuginnenraum austreten kann.

Bei den bisher bekannten Gassack-Modulen, die an einer Instrumententafel angebracht sind, hat das Gehäuse zwei Funktionen. Zum einen wirkt es als Druckkanister, der die beim Entfalten des Gassacks auftretenden Überdrücke aufnimmt. Zum anderen dient er zum Halten und Fixieren des Gasgenerators. Aus diesen Grünen ist es notwendig, dass das Gehäuse eine recht hohe Eigensteifigkeit aufweist.

Aus der WO 2005/100104 A1 ist ein Gassackmodul mit einem Gewebegehäuse bekannt. Mittels zweier Gewebelagen des Gewebegehäuses wird eine Tasche gebildet, die zur Aufnahme des Generators dient. Dadurch ist der Generator am Gewebegehäuse fixiert und insbesondere während der Entfaltung relativ zur Instrumententafel mit diesem beweglich.

Die Aufgabe der Erfindung besteht darin, eine Baugruppe mit einer Instrumententafel und einem Gassack-Modul zu schaffen, welche sich durch ein geringeres Gewicht auszeichnet und den Generator in seiner Position auch während der Entfaltung fixiert.

Zur Lösung dieser Aufgabe ist erfindungsgemäß ein Gassack-Modul zur Anbringung an einer Instrumententafel vorgesehen, mit einem Befestigungsabschnitt, der dafür vorgesehen ist, an der Instrumententafel angebracht zu werden, einem Gasgenerator, einem Gassack, einem Aufnahmeabschnitt für den Gassack, der sich vom Gasgenerator zum Befestigungsabschnitt erstreckt, und einem Halteabschnitt mit einem vom Gassackmodul getrennt ausgeführten Halter, der von außerhalb des Aufnahmeabschnittes zugänglich ist und zur Halterung des Gasgenerators dient. Zur Lösung dieser Aufgabe ist auch eine Baugruppe mit einer Instrumententafel und einem solchen Gassack-Modul vorgesehen, wobei der Befestigungsabschnitt des Gasgenerators mit der Instrumententafel verbunden ist und ein vom Gassack-Modul getrennt ausgeführter Halter vorgesehen ist, der mit dem Halteabschnitt des Gassack-Moduls verbunden ist. Die Erfindung beruht auf der Erkenntnis, dass ein insgesamt geringeres Gewicht erreicht werden kann, wenn auf das bisher zur Befestigung des Gasgenerators vorgesehene Gehäuse verzichtet wird. Stattdessen werden funktional unterschiedliche, separate Bauteile verwendet: zum einen der Aufnahmeabschnitt, der sich vom Gasgenerator zum Befestigungsabschnitt erstreckt und im Wesentlichen Führungsfunktion für den Gassack hat, und zum anderen den Halter, der getrennt vom Gassack-Modul ausgeführt ist und den Gasgenerator in seiner Position fixiert.

Gemäß einer Ausgestaltung der Erfindung ist der Aufnahmeabschnitt eine Schutzlage. Die Schutzlage dient zum Schutz vor mechanischen Beschädigungen des Gassacks durch angrenzende Bauteile unterhalb der Instrumententafel.

Der Aufnahmeabschnitt kann durch ein Gewebegehäuse gebildet sein. Das Gewebegehäuse hat im Wesentlichen Führungsfunktion für den Gassack, wenn dieser sich entfaltet.

Unabhängig von der Ausgestaltung des Aufnahmeabschnitts kann der Befestigungsabschnitt mehrlagig ausgebildet sein, konkret also durch eine wenigstens doppelte Schutzlage oder wenigstens zwei Gewebelagen des Gewebegehäuses. Auf diese Weise lässt sich der vergleichsweise hoch beanspruchte Befestigungsabschnitt mit geringem Aufwand verstärkt ausbilden.

Es ist auch möglich, dass der Aufnahmeabschnitt ein dünnwandiges Gehäuse ist, dessen Eigensteifigkeit geringer ist als diejenige, die zum Halten des Gassacks beim Entfalten notwendig wäre. Auch dieses Gehäuse hat im Wesentlichen lediglich eine Schutzfunktion für den gefalteten Gassack.

Vorzugsweise sind an den Befestigungsabschnitt Verstärkungselemente und/oder Befestigungsmittel angespritzt. Dadurch lässt sich der Befestigungsabschnitt auf einfache Weise verstärken und/oder an der Instrumententafel befestigen.

Gemäß einer Ausgestaltung der Erfindung kann der Halter durch einen Gewebestreifen gebildet sein. Es hat sich herausgestellt, dass der Gasgenerator nicht notwendigerweise stationär befestigt sein muss, sondern lediglich im Wesentlichen in einer Position fixiert sein muss.

Gemäß einer alternativen Ausgestaltung ist vorgesehen, dass der Halter durch einen eigensteifen Bügel gebildet ist, insbesondere aus Kunststoff oder Metall. Ein solcher Bügel hat insgesamt ein sehr viel geringeres Gewicht als die bisher verwendeten, eigensteifen Gehäuse, da der Bügel vergleichsweise schmal ausgeführt sein kann.

Gemäß einer Ausgestaltung der Erfindung ist vorgesehen, dass der Halter mit der Instrumententafel verbunden, insbesondere sogar einstückig mit der Instrumententafel ausgebildet ist. Alternativ kann vorgesehen sein, dass der Halter getrennt von der Instrumententafel angebracht ist. Es kann also abhängig von der jeweiligen Einbausituation der Halter in der jeweils gewünschten Weise ausgeführt werden.

Vorzugsweise ist vorgesehen, dass der Gasgenerator schwimmend am Halter angebracht ist. Dies ermöglicht es dem Gasgenerator, sich in Abhängigkeit von äußeren Kräften optimal zu zentrieren, ohne dass unerwünschte Vorspannungen auf den Halter ausgeübt werden.

Die Erfindung wird nachfolgend anhand zweier Ausführungsformen beschrieben, die in den beigefügten Zeichnungen dargestellt sind. In diesen zeigen:
- Figur 1 schematisch einen Schnitt durch eine Baugruppe gemäß einer ersten Ausführungsform der Erfindung;
- Figur 2 schematisch einen Schnitt durch eine Baugruppe gemäß einer zweiten Ausführungsform der Erfindung;
- Figur 3 schematisch einen Schnitt durch ein Gassackmodul für eine Baugruppe gemäß einer dritten Ausführungsform der Erfindung;
- Figur 4 schematisch einen Schnitt durch ein Gassackmodul für eine Baugruppe gemäß einer vierten Ausführungsform der Erfindung;
- Figur 5 schematisch einen Schnitt durch eine Baugruppe gemäß einer fünften Ausführungsform der Erfindung;
- Figur 6 schematisch das Detail A aus Figur 5 gemäß einer alternativen Ausführungsvariante;
- Figur 7 schematisch einen Schnitt durch eine Baugruppe gemäß einer sechsten Ausführungsform der Erfindung;
- Figur 8 schematisch das Detail B aus Figur 1 gemäß einer alternativen Ausführungsvariante; und
- Figur 9 schematisch das Detail B aus Figur 1 gemäß einer weiteren alternativen Ausführungsvariante.

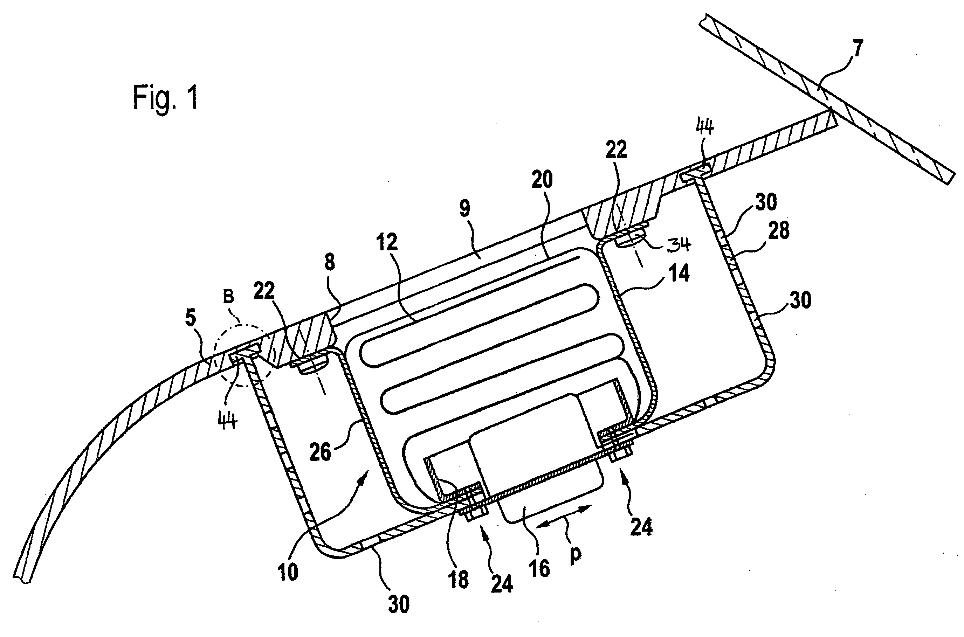

In Figur 1 ist eine Instrumententafel 5 (auch bezeichnet als Armaturenbrett) zu sehen, die an ihrem in der Figur oberen, rechten Ende an eine Windschutzscheibe 7 grenzt. Ihre in Figur 1 linke Seite ist einem Fahrzeuginnenraum eines Kraftfahrzeugs zugewandt, insbesondere einem Beifahrersitz. In der Instrumententafel 5 ist eine Austrittsöffnung 8 vorgesehen, die im Ausgangszustand von einer Klappe 9 verschlossen ist.

An der Instrumententafel 5 ist ein Gassack-Modul 10 angebracht, das einen gefaltet angeordneten Gassack 12, ein Gewebegehäuse 14, einen Gasgenerator 16 und einen Gassackhaltering 18 aufweist. Umschlossen ist der Gassack 12 von einer Banderole 20, die ihn im gefalteten, kompakten Zustand hält.

Das Gewebegehäuse 14 weist einen Aufnahmeabschnitt 26 auf, in welchem der Gassack 12 aufgenommen und geschützt ist. Der Aufnahmeabschnitt ist insbesondere durch die Umfangswandung des Gewebegehäuses 14 gebildet. An den Aufnahmeabschnitt 26 schließt sich ein Befestigungsabschnitt 22 an, der beiderseits der Austrittsöffnung 8 mit der Instrumententafel 5 verbunden ist. Auf der dem Befestigungsabschnitt 22 entgegengesetzten Seite des Gassack-Moduls ist der Gasgenerator 16 fest mit dem Aufnahmeabschnitt verbunden.

Das Gewebegehäuse 14 besteht aus einem Material, wie es beispielsweise auch für die Herstellung von Gassäcken verwendet wird. Es ist zu erkennen, dass das Gewebegehäuse 14 daher nicht eigenstabil ist.

An der dem Befestigungsabschnitt 22 entgegengesetzten Seite des Gassack-Moduls ist ein Halteabschnitt 24 vorgesehen, der von außerhalb des Gewebegehäuses 14 zugänglich ist, insbesondere von der "Rückseite" des Gassack-Moduls. Der Halteabschnitt 24 kann durch einen Klemmbereich, durch Schraubbolzen oder eine andere Gestaltung gebildet sein, die es ermöglicht, ein separates Bauteil außen an dem Gassack-Modul anzubringen, insbesondere am Gasgenerator 16.

Am Halteabschnitt 24 ist ein Halter 28 angebracht, der zur Positionierung und Anbringung des Gasgenerators 16 im Fahrzeug dient. Der Halter 28 ist hier als eigensteifer Bügel ausgeführt. Als Material kann Kunststoff oder Metall verwendet werden.

Bei der gezeigten Ausführungsform ist der Bügel 28 an der Instrumententafel 5 angebracht. Es ist auch möglich, den Bügel 28 an anderen fahrzeugfesten Bauteilen anzubringen, die unterhalb der Instrumententafel 5 sich befinden.

Der Bügel 28 umgibt das Gassack-Modul 10 nicht auf allen Seiten, sondern übergreift dieses lediglich als schmaler Streifen. Es stellt somit keinerlei druckdichten Abschluss des Gasgenerators dar. Zur Gewichtsersparnis können Öffnungen 30 vorgesehen sein. Dies verdeutlicht weiter, dass der Halter 28 keinerlei Einfluss auf die Druckverhältnisse im Inneren des Gassack-Moduls 10 beim Entfalten hat.

Der Halteabschnitt 24 des Gassack-Moduls bzw. des Gasgenerators 16 ist am Bügel 28 schwimmend angebracht, sodass eine Relativbewegung zwischen Bügel 28 und Gasgenerator 16 möglich ist (siehe den Pfeil P in Figur 1).

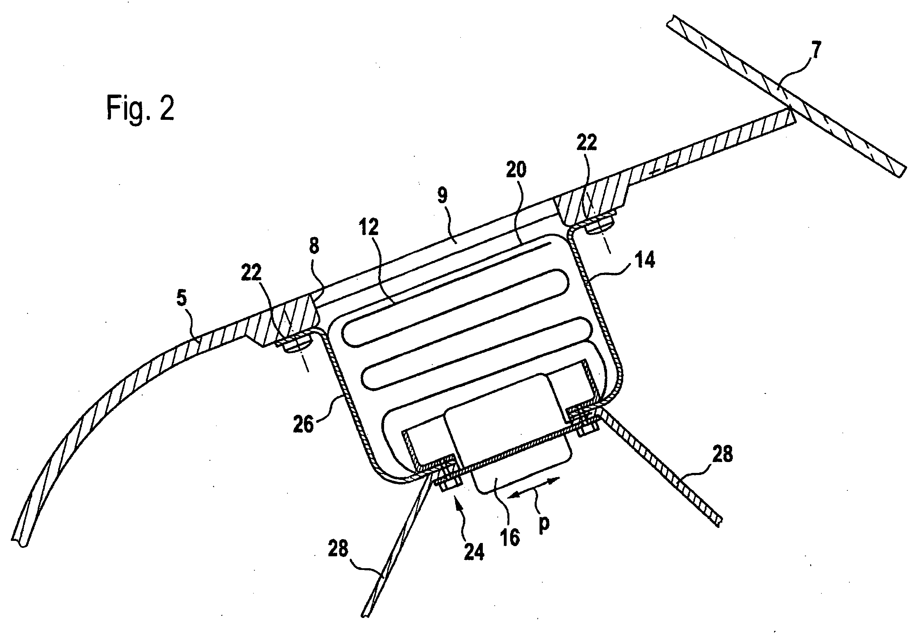

In Figur 2 ist eine zweite Ausführungsform gezeigt, wobei für die von der ersten Ausführungsform bekannten Bauteile dieselben Bezugszeichen verwendet werden. Insoweit wird auf die obigen Erläuterungen verwiesen.

Der Unterschied zwischen der ersten und der zweiten Ausführungsform besteht darin, dass bei der zweiten Ausführungsform der Halter 28 durch ein Band, beispielsweise einen Gewebestreifen, gebildet ist, der den Gasgenerator 16 in einer flexiblen Position hält. Der Gasgenerator ist also "eingespannt" zwischen dem Gewebegehäuse 14, welches ihn in Figur 2 nach oben hin an der Instrumententafel 5 fixiert, und dem Halter 28, der ihn von der Instrumententafel weg, in der Figur also nach unten, zieht. Der Halter 28 ist hierbei an anderen fahrzeugfesten Bauteilen angebracht, die unterhalb der Instrumententafel 5 angeordnet sind.

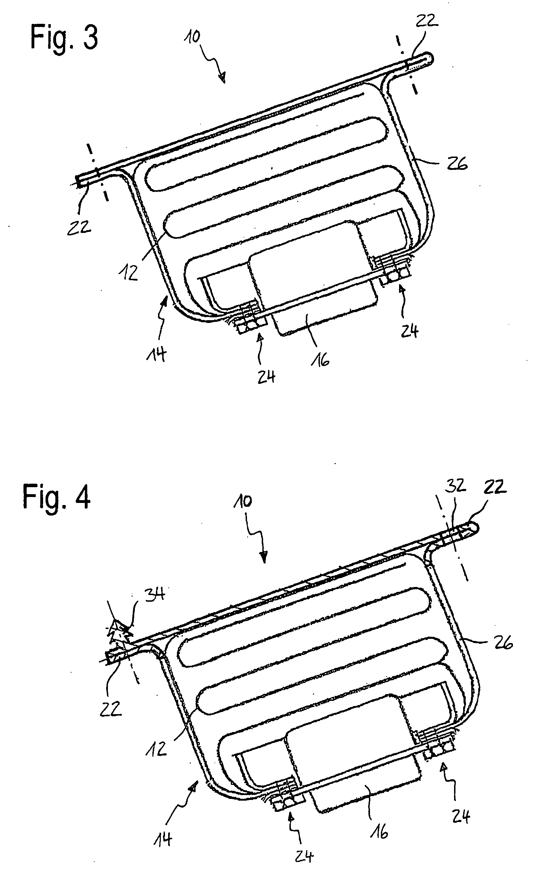

Als Material für das Gewebegehäuse 14 eignet sich beispielsweise handelsübliches Polyamid-Gewebe, wobei in vergleichsweise hoch beanspruchten Gehäuseabschnitten mehrere Gewebelagen zur Verstärkung des Gewebegehäuses 14 angeordnet sein können. So zeigt die Figur 3 das Gassack-Modul 10 gemäß einer dritten Ausführungsform, bei welcher die hochbeanspruchten Befestigungsabschnitte 22 zur Verstärkung des Gewebegehäuses 14 jeweils mehrlagig ausgeführt sind, konkret durch jeweils zwei Gewebelagen.

Alternativ oder zusätzlich zur mehrlagigen Gewebeanordnung kann das Gewebegehäuse 14 in hochbeanspruchten Gehäuseabschnitten mit einem Kunststoffmaterial umspritzt werden, um die Festigkeit und Steifigkeit des Gewebes zu erhöhen.

Gemäß Figur 4 sind die Befestigungsabschnitte 22 zur Verstärkung des Gewebegehäuses 14 umspritzt. Im Bereich des rechten Befestigungsabschnitts 22 weist das Kunststoffmaterial beispielhaft eine Aussparung 32 zum Durchstecken eines Befestigungsmittels 34, insbesondere einer Schraube oder eines Niets auf. Alternativ kann das Befestigungsmittel 34 als Rastelement im Kunststoffmaterial angeformt und unmittelbar an das Gewebe angespritzt sein, wie im Bereich des linken Befestigungsabschnitts 22 angedeutet.

Selbstverständlich kann statt eines Polyamid-Gewebes alternativ auch ein Gewebe aus Stahl, Fiberglas, Kevlar o.ä. zum Einsatz kommen.

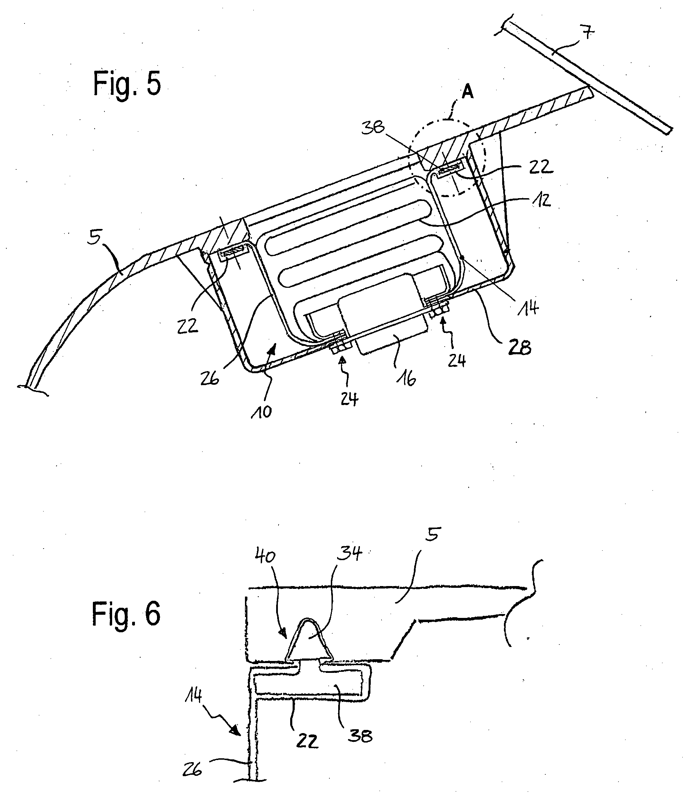

In einer fünften Ausführungsform gemäß Figur 5 weist das Gewebegehäuse 14 im Bereich der Befestigungsabschnitte 22 als Verstärkungsleisten ausgebildete Verstärkungselemente 38 auf, welche die Befestigung des Gewebegehäuses 14 an der Instrumententafel 5 vereinfachen und verstärken. Die Verstärkungselemente 38 sind in Figur 5 in Gewebeschlaufen 36 eingelegt und werden beispielsweise durch Befestigungsmittel 34 (siehe Figur 1) mit der Instrumententafel 5 verbunden, insbesondere verschraubt.

Die Figur 6 zeigt das Befestigungsdetail A gemäß Figur 5 in einer alternativen Ausführungsvariante. In diesem Fall sind die als Rastelemente ausgebildeten Befestigungsmittel 34 an die Verstärkungselemente 38 angeformt und können in entsprechende Ausnehmungen 40 der Instrumententafel 5 eingreifen, sodass das Gewebegehäuse 14 durch eine einfache Rastbefestigung mit der Instrumententafel 5 verbunden ist.

Statt dem Einlegen oder Einnähen der Verstärkungselemente 38 in Gewebeschlaufen 36 des Gewebegehäuses 14 ist alternativ auch denkbar, dass die Verstärkungselemente 38 aus einem Kunststoffmaterial hergestellt und im Bereich der Befestigungsabschnitte 22 an das Gewebegehäuse 14 angespritzt sind.

Der gesamte Halter 28 ist im Ausführungsbeispiel gemäß Figur 5 als eigensteifer Bügel ausgeführt und einstückig mit der Instrumententafel 5 ausgebildet, insbesondere unmittelbar an die Instrumententafel 5 angespritzt.

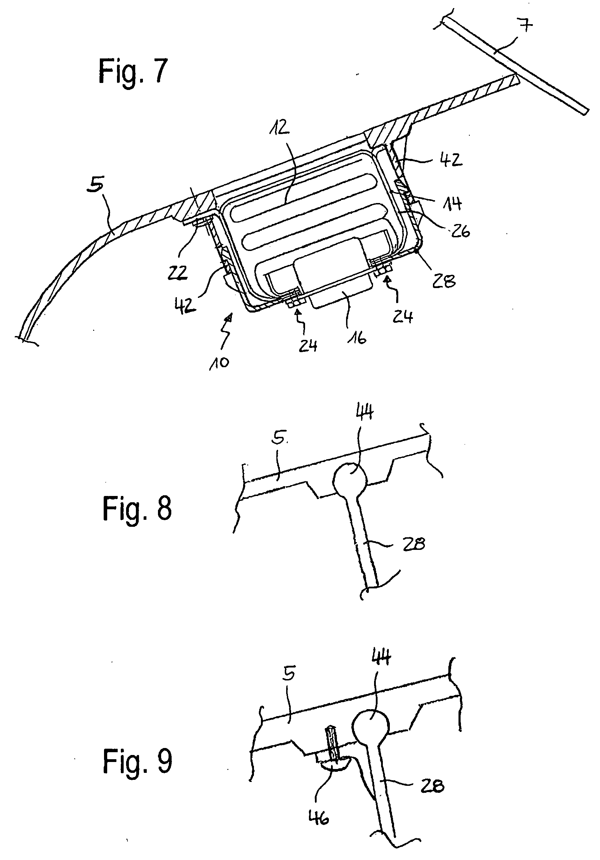

Demgegenüber zeigt die Figur 7 eine sechste Ausführungsform, bei welcher lediglich Befestigungsfortsätze 42 für den Halter 28 in die Instrumententafel 5 integriert sind. Vorzugsweise wird die Instrumententafel 5 zusammen mit den Befestigungsfortsätzen 42 im Spritzgussverfahren hergestellt. Der als schmaler, eigensteifer Bügel ausgeführte Halter 28 stellt im vorliegenden Fall ein erstes Rastelement dar, welches in die als zweite Rastelemente ausgeführten Befestigungsfortsätze 42 eingreift, sodass der Halter 28 mit geringem Aufwand an der Instrumententafel 5 verrastet werden kann.

Gemäß Figur 1 ist der Halter 28 komplett vorgefertigt und weist T-förmig aufgespreizte Enden 44 auf, welche zur Verankerung des Halters 28 in die Instrumententafel 5 eingespritzt sind.

Die Figuren 8 und 9 zeigen jeweils das Detail B aus Figur 1 mit weiteren Alternativen zur Befestigung des Halters 28 an der Instrumententafel 5. Gemäß Figur 8 weist der Halter 28 im Querschnitt ballig verdickte Enden 44 auf, welche in entsprechende Ausnehmungen der Instrumententafel 5 einrasten oder eingehängt werden können.

Auch in der Ausführungsvariante gemäß Figur 9 ist der Halter 28 analog zu Figur 8 mit der Instrumententafel 5 verrastet oder in diese eingehängt. Zusätzlich sind der Halter 28 und die Instrumententafel 5 jedoch auch noch durch eine Sicherungsschraube 46 miteinander verschraubt, um eine zuverlässige und starke Verbindung der Bauteile zu gewährleisten.

## Patentansprüche

1. Baugruppe mit einer Instrumententafel (5) und einem Gassack-Modul (10), mit einem Befestigungsabschnitt (22), der an der Instrumententafel (5) angebracht ist, mit einem Gasgenerator (16), einem Gassack (12), einem Aufnahmeabschnitt (26) für den Gassack (12), der sich vom Gasgenerator (16) zum Befestigungsabschnitt (22) erstreckt, und einem Halteabschnitt (24), der von außerhalb des Aufnahmeabschnittes (26) zugänglich ist und zur Halterung und Fixierung des Gasgenerators (16) dient, **dadurch gekennzeichnet, dass** ein vom Gassack-Modul (10) getrennt ausgeführter Halter (28) vorgesehen ist, der zur Fixierung des Gasgenerators (16) in im Wesentlichen einer Position dient und der mit dem Halteabschnitt (24) des Gassack-Moduls (10) verbunden ist.

2. Baugruppe nach Anspruch 1, **dadurch gekennzeichnet, dass** der Aufnahmeabschnitt (26) eine Schutzlage ist.

3. Baugruppe nach Anspruch 1, **dadurch gekennzeichnet, dass** der Aufnahmeabschnitt (26) ein Gewebegehäuse (14) ist.

4. Baugruppe nach einem der vorhergehenden Ansprüche, **dadurch gekennzeichnet, dass** der Befestigungsabschnitt (22) mehrlagig ausgebildet ist.

5. Baugruppe nach Anspruch 1, **dadurch gekennzeichnet, dass** der Aufnahmeabschnitt (26) ein dünnwandiges Gehäuse ist, dessen Eigensteifigkeit geringer ist als diejenige, die zum Halten des Gassacks beim Entfalten notwendig wäre.

6. Baugruppe nach einem der vorhergehenden Ansprüche, **dadurch gekennzeichnet, dass** an den Befestigungsabschnitt (22) Verstärkungselemente (38) und/oder Befestigungsmittel (34) angespritzt sind.

7. Baugruppe nach Anspruch 1, **dadurch gekennzeichnet, dass** der Halter (28) durch einen Gewebestreifen gebildet ist.

8. Baugruppe nach Anspruch 1, **dadurch gekennzeichnet, dass** der Halter (28) durch einen eigensteifen Bügel gebildet ist, insbesondere aus Kunststoff oder Metall.

9. Baugruppe nach einem der Ansprüche 1 bis 8, **dadurch gekennzeichnet, dass** der Halter (28) mit der Instrumententafel (5) verbunden ist.

10. Baugruppe nach Anspruch 9, **dadurch gekennzeichnet, dass** der Halter (28) einstückig mit der Instrumententafel (5) ausgebildet ist.

11. Baugruppe nach einem der Ansprüche 1 bis 8, **dadurch gekennzeichnet, dass** der Halter (28) getrennt von der Instrumententafel (5) angebracht ist.

12. Baugruppe nach einem der Ansprüche 1 bis 11, **dadurch gekennzeichnet, dass** der Gasgenerator (16) schwimmend am Halter (28) angebracht ist.

## Claims

1. A subassembly comprising an instrument panel (5) and an airbag module (10), comprising a mounting portion (22) attached to the instrument panel (5), comprising an inflator (16), an airbag (12), a housing portion (26) for the airbag (12) which extends from the inflator (16) to the mounting portion (22) and a retaining portion (24) which is accessible from outside of the housing portion (26) and serves for supporting and fixing the inflator (16), **characterized in that** a holder (28) designed to be separate from the airbag module (10) is provided, which holder serves for fixing the inflator (16) at substantially one position and which is connected to the retaining portion (24) of the airbag module (10).

2. The subassembly according to claim 1, **characterized in that** the housing portion (26) is a protective layer.

3. The subassembly according to claim 1, **characterized in that** the housing portion (26) is a fabric housing (14).

4. The subassembly according to any one of the preceding claims, **characterized in that** the mounting portion (22) is configured to be multi-layered.

5. The subassembly according to claim 1, **characterized in that** the housing portion (26) is a thin-walled case having an inherent rigidity which is inferior to the one required for retaining the airbag during deployment.

6. The subassembly according to any one of the preceding claims, **characterized in that** reinforcing elements (38) and/or mounting means (34) are injection-molded to the mounting portion (22).

7. The subassembly according to claim 1, **characterized in that** the support (28) is formed by a fabric strip.

8. The subassembly according to claim 1, **characterized in that** the support (28) is formed by a rigid bracket, especially made of plastic material or metal.

9. The subassembly according to any one of the claims 1 to 8, **characterized in that** the support (28) is connected to the instrument panel (5).

10. The subassembly according to claim 9, **characterized in that** the support (28) is formed integrally with the instrument panel (5).

11. The subassembly according to any one of the claims 1 to 8, **characterized in that** the support (28) is arranged separately from the instrument panel (5).

12. The subassembly according to any one of the claims 1 to 11, **characterized in that** the inflator (16) is arranged to be floating on the support (28).

## Revendications

1. Ensemble comportant un tableau de bord (5) et un module airbag (10) ayant une partie de fixation (22) qui est monté sur le tableau de bord (5), avec un générateur de gaz (16), un coussin gonflable (12), une partie réceptrice (26) pour le coussin gonflable (12) qui se prolonge à partir du générateur de gaz (16) jusqu'à la partie de fixation (22), et une partie de maintien (24), qui est accessible depuis l'extérieur de la partie de réception (26) et sert pour le maintien et la fixation du générateur de gaz (16), **caractérisé en ce qu'**un support (28) conçu séparé du module airbag (10) est prévu, lequel sert pour la fixation du générateur de gaz (16) dans une position particulière et est relié avec la partie de retenue (24) du module airbag (10).

2. Ensemble selon la revendication 1, **caractérisé en ce que** la partie réceptrice (26) est une couche de protection.

3. Ensemble selon la revendication 1, **caractérisé en ce que** la partie réceptrice (26) est une enveloppe en tissu (14).

4. Ensemble selon l'une quelconque des revendications précédentes, **caractérisé en ce que** la partie de fixation (22) est formée de plusieurs couches.

5. Ensemble selon la revendication 1, **caractérisé en ce que** la partie réceptrice (26) est une enveloppe à paroi mince dont la tenue est inférieure à celle qui serait nécessaire pour maintenir le coussin gonflable lors de son déploiement.

6. Ensemble selon l'une des revendications précédentes, **caractérisé en ce que** des éléments de renfort (38) et/ou des moyens de fixation (34) sont sur la partie de fixation (22).

7. Ensemble selon la revendication 1, **caractérisé en ce que** le support (28) est formé d'une bande de tissu.

8. Ensemble selon la revendication 1, **caractérisé en ce que** le support (28) est formé par un support de nature rigide, en particulier en matière plastique ou en métal.

9. Ensemble selon l'une quelconque des revendications 1 à 8, **caractérisé en ce que** le support (28) est relié au le tableau de bord (5).

10. Ensemble selon la revendication 9, **caractérisé en ce que** le support (28) est formé d'un seul tenant avec le tableau de bord (5).

11. Ensemble selon l'une quelconque des revendications 1 à 8, **caractérisé en ce que** le support (28) est monté séparé du tableau de bord (5).

12. Ensemble selon l'une quelconque des revendications 1 à 11, **caractérisé en ce que** le générateur de gaz (16) est monté flottant sur le support (28).
